# EUROPEAN PATENT SPECIFICATION

(11) **EP 3 666 079 B1**
(45) Date of publication and mention of the grant of the patent: **30.07.2025**
(21) Application number: 20155655.2
(22) Date of filing: 08.06.2016
(51) Int. Cl.: A23B 4/12, A23L 27/00, A23L 27/24, A23P 10/40

(54) **CONCENTRATED NATURAL FOOD ADDITIVE AND METHODS OF PREPARING THE SAME**
KONZENTRIERTES NATÜRLICHES NAHRUNGSMITTELADDITIV UND VERFAHREN ZUR HERSTELLUNG DAVON
ADDITIF ALIMENTAIRE NATUREL CONCENTRÉ ET SON PROCÉDÉ DE PRÉPARATION

(30) Priority: 10.06.2015 US 201562173634 P
(43) Date of publication of application: 17.06.2020
(62) Divisional of application: 16173523.8
(73) Proprietor: WTI, INC., Jefferson, GA 30549 (US)
(72) Inventor: HYUSEINOV, Ertan Ergyunov, JEFFERSON, GA Georgia 30549 (US); LUDWIG, Wolfgang Peter, JEFFERSON, GA Georgia 30549 (US)
(74) Representative: Comoglio, Elena

(56) References cited:
- WO-A1-2014/021719
- WO-A1-2015/134883
- US-A1- 2007 059 423

## Description

### TECHNICAL FIELD

The present disclosure relates to methods for preparing concentrated natural acetate food additives from vinegar as well as compositions containing the concentrated naturally-derived acetate in proportions effective to achieve desired pH for increased water binding and antimicrobial purposes.

### BACKGROUND

Food additives are defined by the Food and Drug Administration as any substance used to provide a technical effect in foods. Due to increased production of prepared and processed foods, the use of food additives has become more widespread in recent years. Before a food additive may be added to food, its safety is assessed by the Food Safety and Inspection Service (FSIS) of the U.S. Department of Agriculture (USDA).

US 2007/059423 discloses a composition comprising a neutralised vinegar concentrate comprising an equimolar ratio of acetic acid to sodium acetate. Also disclosed is a method of preparing a neutralised vinegar concentrate comprising treating vinegar with an effective amount of a neutralising agent to completely neutralise the vinegar; concentrating the neutralised vinegar by removing water therefrom; and adding an effective amount of untreated vinegar to the concentrated neutralised vinegar to obtain an equimolar ratio of sodium acetate to acetic acid.

WO 2014/021719 discloses a process of producing a powdered vinegar comprising the steps of: (i) providing a first liquid vinegar; (ii) adjusting the pH of said first liquid vinegar to a value within the range of 5.5-7.0 to obtain a neutralised vinegar; (iii) drying said neutralised vinegar to produce vinegar derived particles having a water content of less than 5 wt.°/O; (iv) providing a second liquid vine-gar; (v) combining said second liquid vinegar with the vinegar derived particles in a weight ratio of 1 : 15 to 1 : 1; wherein, during step (v), the vinegar derived particles are agitated and the temperature of the vinegar derived particles and second liquid vinegar is controlled to stay below 54°C.

WO 2015/134883 discloses a method of preparing a vinegar-based antimicrobial for meat products, the steps of: (a) partially neutralising vinegar by the addition of a mild acid; (b) removing the water from the partially neutralised vinegar; and (c) spraying vine-gar to the dried, partially neutralised vinegar.

When a food additive is proposed for use in meat, poultry, or egg products, its safety, its technical function, and its conditions of use are evaluated by the Labeling and Consumer Protection Staff of the FSIS, per the Federal Meat Inspection Act, Poultry Products Inspection Act, Egg Products Inspection Act, and other related regulations. The FSIS has established a list of food additives which it considers as safe and suitable ingredients. Even if food additives are considered as safe by the FSIS, there is a distinction between chemical additives and those which are considered "natural".

A product containing no artificial ingredient or added color and is only minimally processed (a process which does not fundamentally alter the raw product) may be labeled as "natural". The label must explain the use of the term "natural". When food additives are produced or derived other than naturally and subsequently added to food, they must be declared as such. For instance, if acetic acid, found naturally in vinegar, is added to a food, it must be declared as acetic acid on the label. However, if the acetic acid is derived from vinegar, it may be listed on the label as "vinegar" modified by source, rather than the chemical name.

The distinction between chemical and natural additives is becoming increasingly important within the industry. Consumers are becoming more aware of the foods they eat and the additives which are included in those foods. As a result, sales of foods labeled "natural" are increasing and predicted to continue increasing with increasing consumer awareness. Consequently, food manufacturers are looking to naturally derived products as food additives in order to maintain an "all-natural" label.

The FSIS lists certain additives, such as sodium acetate and potassium acetate, as a safe and suitable ingredient for use in foods. In the industry, various acetates are commonly used as buffers in controlling the pH of food items during various stages of processing as well as for the finished consumable product. Acetates are also considered as excellent agents for buffering mineral acids, as well as cosmetics. Used in conjunction, certain mixtures of acetates may act as flavor enhancers. Furthermore, various acetates may be used as antimicrobial agents to increase the shelf-life of meats, fishes, and poultry.

The present disclosure addresses the aforementioned needs. In an embodiment, a method of preparing a concentrated food additive is provided. The method consists of: a) treating vinegar with a basic neutralizing agent to partially neutralize the vinegar to a pH in the range of 4.0 to 5.5; and (b) evaporating water from and drying the product of step (a) to produce the concentrated food additive consisting of an acetate and an acid in the form of a powder.

In an embodiment, a concentrated food additive is provided. The concentrated food additive is obtainable by: (a) treating vinegar with a basic neutralizing agent to partially neutralize the vinegar to a pH in the range of about 4.0 to about 5.5; and (b) evaporating water from and drying the product of step (a) to produce the concentrated food additive consisting of an acetate and an acid in the form of a powder..

In an embodiment use of the concentrated food additive, as described in any one or more aspects herein, is provided to reduce bacterial growth and retain flavor in meat, poultry or fish. The use of the concentrated food additive can comprise injecting and/or massaging the aforementioned concentrated antimicrobial food additive into the meat, poultry, or fish to reduce bacterial growth during storage of the meat, poultry, or fish.

In an embodiment, use of the concentrated food additive, as described in any one or more aspects herein, is provided to increase or decrease the pH of a marinade for meat, poultry or fish. The use the concentrated food additive can comprise adding the aforementioned concentrated food additive to the marinade.

In any one or more of the foregoing embodiments and aspects, the basic neutralizing agent can be selected from the group consisting of: sodium, potassium, calcium or magnesium carbonate or bicarbonate, and combinations thereof. The acetate can be selected from the group consisting of: sodium acetate, potassium acetate, calcium acetate and magnesium acetate. The concentrated food additive can be in the form of a concentrated acetate and an acid can have a high acid value. The acidity of the concentrated food additive, for example in the form of an acetate and acid product, can, in an aspect, be at least 5%. In another aspect the acidity can be about 5% to about 50%. In any one or more aspects, the final concentrated food additive consists of an acetate and an acid in the form of a powder. The acid can be acetic acid.

Other embodiments of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

### DETAILED DESCRIPTION

### Discussion

Unless defined otherwise, all technical and scientific terms used herein have the same meaning as commonly understood by one of ordinary skill in the art to which this disclosure belongs. Although any methods and materials similar or equivalent to those described herein can also be used in the practice or testing of the present disclosure, the preferred methods and materials are now described.

The citation of any publication is for its disclosure prior to the filing date and should not be construed as an admission that the present disclosure is not entitled to antedate such publication by virtue of prior disclosure. Further, the dates of publication provided could be different from the actual publication dates that may need to be independently confirmed.

Embodiments of the present disclosure will employ, unless otherwise indicated, techniques of chemistry, synthetic inorganic chemistry, analytical chemistry, and the like, which are within the skill of the art. Such techniques are explained fully in the literature.

The following examples are put forth so as to provide those of ordinary skill in the art with a complete disclosure and description of how to perform the methods and use the compositions and compounds disclosed and claimed herein. Unless indicated otherwise, parts are parts by weight, temperature is in °C, and pressure is in bar. Standard temperature and pressure are defined as 0 °C and 1 bar.

It is to be understood that, unless otherwise indicated, the present disclosure is not limited to particular materials, reagents, reaction materials, manufacturing processes, or the like, as such can vary. It is also to be understood that the terminology used herein is for purposes of describing particular embodiments only, and is not intended to be limiting. It is also possible in the present disclosure that steps can be executed in different sequence where this is logically possible.

Prior to describing the various embodiments, the following definitions are provided and should be used unless otherwise indicated.

### I. Definitions

Unless otherwise defined, all technical and scientific terms used herein have the same meaning as commonly understood by one of ordinary skill in the art of molecular biology.

Although methods and materials similar or equivalent to those described herein can be used in the practice or testing of the present disclosure, suitable methods and materials are described herein.

The following terms have the meanings ascribed to them unless specified otherwise. In this disclosure:
As used herein, "food additive" refers to any substance safely added to food to preserve flavor, improve taste, or prolong shelf-life. Examples include, but are not limited to, food acids, acidity regulators, antimicrobials, buffering agents, buffer solutions, flavor enhancers, and preservatives.

As used herein, "buffering agent" or "buffering food additive" refers to any food additive safely added to food to adjust the pH of the food to which it is added. For example, buffering agents are usually either the weak acid or weak base component of a buffer solution, and their function is to drive an acidic or basic solution to a certain pH state or prevent its pH state from changing. Examples include, but are not limited to, aluminum potassium sulfate, sodium citrate, sodium acetate, and potassium acetate.

As used herein, "antimicrobial", "antimicrobial solution", or "antimicrobial food additive" refers to a food additive safely added to food to reduce the growth of or kill microbes. Examples include, but are not limited to, organic acids, such as lactic acid, citric acid, acetic acid, and their salts including, but not limited to, sodium acetate and potassium acetate. Examples of microbes include, but are not limited to, bacteria, viruses, fungi, and parasites.

As used herein, "pH" refers to a measure of acidity or basicity of a solution, as defined by the Henderson-Hasselbach equation: pH = pKa + log[concentration of compound in its acidic form] / [concentration of compound in its basic form].

As used herein, "basic neutralizing agent" refers to a base in solution with an acid resulting in neutralization. Examples of basic neutralizing agents include, but are not limited to, sodium bicarbonate, sodium carbonate, potassium bicarbonate, and the like.

The term "food products", as used herein, is to be understood in a broad sense and includes meat products, fish products, dairy products, beverage products, baking products, unpasteurized food products, salads, and sauces, marinades, salsas and seasonings. In some embodiments, the food product contains one or more meat products such as beef, pork, poultry, or fish. The food products can be ready-to-eat food products. The term "ready-to-eat" means the food product is distributed to be consumed without further preparation by the consumer or distributed to not require cooking or preparation to achieve food safety prior to consumption.

As used herein, "meat" refers to edible flesh of animals that is acceptable for human consumption including, but not limited to, chicken, pork, beef, and fish. Most species of animal may be used as meat. Although, most meat consumed by humans is sourced from domesticated animals and aquatic species. A "meat product" primarily contains animal tissue, e.g. contains at least 70%, at least 80%, at least 90%, or at least 95% animal tissue including, but not limited to, beef, pork, poultry, and fish. Other animal tissues can include the tissue of many ungulates that can be used for human consumption such as deer, oxen, antelope, sheep, and goat. The term "meat product" as used herein encompasses processed meats (such as sausages, hamburgers, luncheon meats and cold cuts) and pre-prepared meat dishes such as meat pies, fish pies, game pies, stews, lasagnas and other meat-containing pasta dishes, chicken kiev, chicken cordon-bleu, chicken-a-la-king, meat rolls, meatloaf, pates, sushi, sashimi, salmon mousses, fishcakes, stir-fries etc.

The term "ready-to-eat food product" should include any food product, which is distributed to be consumed without further preparation by the consumer or distributed to not require cooking prior to consumption. The term "ready-to-eat meat product" should include any meat product, which is distributed to be consumed without further preparation by the consumer or distributed to not require cooking prior to consumption. Ready-to-eat meat products include, but are not limited to, pates, hot dogs, bologna, ham, salami, sausages, deli meats, cold cuts, and dried or cured meat products. Ready-to-eat meat products can include ready-to-eat beef products, ready-to-eat pork products, ready-to-eat poultry products, and ready-to-eat fish products.

The term "beef product", as used herein, refers to any food that primarily contains cow tissue, e.g. contains at least 70%, at least 80%, at least 90%, or at least 95% cow tissue. The term "cow" refers to any animal of the genus Bos, such as for example the Bos Taurus, which is used as a food source for human consumption. Exemplary cow breeds used as commercial livestock include the Holstein, Ayrshire, Angus, and Limousin.

The term "poultry product", as used herein, refers to any food that primarily contains poultry tissue, e.g. contains at least 70%, at least 80%, at least 90%, or at least 95% poultry tissue. The term "poultry" refers to any edible birds such as chickens, turkeys, ducks, geese, and squab. Poultry can include animals of the genus Gallus, for example the Gallus gallus domesticus, which is used as a food source for human consumption. Poultry can include animals of the genus Meleagris, for example the Meleagris gallopavo, which is used as a food source for human consumption.

The term "pork product", as used herein, refers to any food product that primarily contains pig tissue, e.g. contains at least 70%, at least 80%, at least 90%, or at least 95% pig tissue. The term "pig" refers to any animal of the genus Sus, such as for example Sus Scrofa, which is used as a food source for human consumption. Exemplary pig breeds used as commercial livestock include Berkshire, Large White, Duroc, Hampshire, Landrace, Meishan, Pietrain, and many others.

As used herein, the term "fish product" should include any food product that primarily contains tissue from an aquatic animal, e.g. contains at least 70%, at least 80%, at least 90%, or at least 95% tissue from an aquatic animal. Aquatic animals can include lobster, crab, fresh water fish, smoked salmon, smoked other fish, salted fish, saltwater fish and other seafood.

As used herein, the terms "preserving", "preserve (d)", "curing", and "cure( d)" refer to any improvement in the amount of time that meat or meat product treated with the curing agent can be safely stored (e.g., shelf-life), or remains sensory, organoleptic, or color-acceptable, when compared with meat or meat products that have not been cooked, cured, preserved, or treated with any shelf-life extending agent, such as salt or smoke.

As used herein, an "effective amount" is at least the minimum concentration or amount required to have a measurable decrease in one or more changes contributing to decreased shelf life of a food product including, but not limited to, water loss, oxidation, odor development, discoloration, or microbial changes such as the growth rate or concentration of one of more microorganisms that contribute to decreased shelf life of a food product.

As used herein, the term "shelf life" refers to the period of time that a food product remains saleable to retail customers and remains fit and safe for use or consumption. Changes including, but not limited to, oxidation, odor development, discoloration in addition to microbial changes can alter the shelf life of the food product. In traditional meat processing, the shelf life of fresh meat and meat by-products is about 30 to 40 days after an animal has been slaughtered. Refrigeration of meat during this period of time largely arrests and/or retards the growth of micro-organisms. After about 30 to 40 days, however, refrigeration can no longer effectively control the proliferation of micro-organisms. Micro-organisms present on meat products after this time period may have proliferated to a great extent and/or have generated unacceptable levels of undesirable by-products. Spoilage micro-organisms may also act to discolor meat, making such meat unappealing and undesirable for human consumption. Pathogenic micro- organisms may have proliferated in this time period to a level wherein they can cause disease in an animal that consumes the food product.

"Food preservation", as used herein, refers to methods which maintain or enhance food safety or palatability for example, by controlling the growth and proliferation of pathogenic and spoilage micro-organisms, thus guarding against food poisoning and delaying or preventing food spoilage, or by guarding against water loss, discoloration, or the development of unpleasant odors associated with food spoilage. Food preservation helps food remain safe and palatable for consumption for longer periods of time (i.e. improves the shelf life) and inhibits or prevents nutrient deterioration and/or organoleptic changes which cause food to become less palatable.

The term "micro-organism" as used herein, includes bacteria, fungi and parasites. Nonlimiting examples of micro-organisms that can be controlled using the formulations and methods described herein include bacteria from the genus *Aeromonas* (e.g. *A. hydrophilia*), *Arcobacter, Bacillus* (e.g. B. *cereus*), *Brochothrix* (e.g. B. *thermosphacta*), *Campylobacter* (e.g. *C. jejuni*), *Carnobacterium* (e.g. C. *piscicola*), *Chlostridium* (e.g. *C. perfringens, C botulinum), Enterobacteriacae, Escherichia* (e.g. *E. coli* O157:H7), *Listeria* (e.g. *L. monocytogenes*), *Pseudomonas* (e.g. *P. putida, P. fluorescens*), *Salmonella* (e.g. *S. Typhimurium*), *Serratia* (e.g. *S. liquefaciens*), *Shigella, Staphylococcus* (e.g. *S. aureus*), *Vibrio* (e.g. *V. parahaemolyticus, V. cholerae*) and *Yersina* (e.g. Y. *enterocolitica*); fungi such as *Aspergillus flavum* and *Penicillium chrysogenum;* parasites such as *Amoebiasis* (*Emoebiasis histolytica*), *Balantidiosis* (*Balantidiosis coli*), *Entamoeba histolytica, Cryptosporidiosis* (e.g. *Cryptosporidium parvum*), *Cyclosporidiosis* (e.g. *Cyclospora cayetanensis*), *Giardiasis* (e.g. *Giardia lamblia, Giardia intestinalis*), *Isosporiasis* (*Isosporiasis belli*), *Microsporidiosis* (*Enter ocytozoon bieneusi, S.intestinalis*), *Trichinella spiralis* and *Toxoplasma gondii.* The term micro-organism also refers to vegetative or dormant forms of bacteria and fungi, such as spores wherein activation of the growth cycle may be controlled using the methods provided herein.

The term "spoilage micro-organism" as used herein refers to a micro-organism that acts to spoil food. Spoilage micro-organisms may grow and proliferate to such a degree that a food product is made unsuitable or undesirable for human or animal consumption. The production of undesirable by-products by the microorganism, such as carbon dioxide, methane, nitrogenous compounds, butyric acid, propionic acid, lactic acid, formic acid, sulfur compounds, and other gases and acids can cause detrimental effects on the foodstuff alteration of the color of meat surfaces to a brown, grey or green color, or creation of an undesirable odor. The color and odor alterations of food products due to the growth of spoilage micro-organisms frequently result in the product becoming unsaleable.

The term "pathogenic micro-organism" as used herein refers to a micro-organism capable of causing disease or illness in an animal or a human, for example, by the production of endotoxins, or by the presence of a threshold level of micro-organisms to cause food poisoning, or other undesirable physiological reactions in humans or animals.

### II. Embodiments of the Present Disclosure

The present disclosure provides a concentrated vinegar-derived food additive, methods of preparing the concentrated vinegar-derived food additive, and uses of the concentrated vinegar-derived food additive.

In an embodiment, the present disclosure provides a concentrated food additive composition containing a concentrated vinegar-derived sodium, potassium, calcium or magnesium acetate. The composition is in a powder form.

In an embodiment, the present disclosure provides a composition which is an antimicrobial food additive containing a concentrated vinegar-derived acetate, such as an acetate and an acid. The antimicrobial food additive can be produced by treating vinegar with a basic neutralizing agent to produce a partially-neutralized vinegar with a pH in the range of about 4.0 to about 5.5. In any one or more aspects, the basic neutralizing agent can be sodium bicarbonate, sodium carbonate, potassium bicarbonate, potassium carbonate, calcium bicarbonate, calcium carbonate, magnesium bicarbonate, magnesium carbonate, and combinations thereof. The partially neutralized vinegar is dried, to produce a final product in the form of a concentrated acetate and an acid. The partially-neutralized vinegar is dried, for example, by evaporation and heat. Suitable drying processes include spray drying and drying under vacuum. The concentrated acetate can be sodium acetate, potassium acetate, calcium acetate, or magnesium acetate.

In an embodiment, the present disclosure provides a composition that is a buffering food additive containing a concentrated vinegar-derived acetate. The buffering food additive can be produced by treating vinegar with a basic neutralizing agent to produce a partially-neutralized vinegar with a pH of in the range of about 4.0 to about 5.5. The basic neutralizing agent can be sodium bicarbonate, sodium carbonate, potassium bicarbonate, potassium carbonate, calcium bicarbonate, calcium carbonate, magnesium bicarbonate, magnesium carbonate, and combinations thereof. The partially neutralized vinegar is dried, preferably by evaporation and heat, to produce a concentrated acetate and an acid. The partially-neutralized vinegar can be dried, for example, by evaporation and heat, as described above. The concentrated acetate can be sodium acetate, potassium acetate, calcium acetate or magnesium acetate.

In an embodiment, the present disclosure provides a method of preparing a concentrated food additive from vinegar comprising:
(a) treating vinegar with a basic neutralizing agent (e.g. sodium, potassium, calcium or magnesium carbonate or bicarbonate, and combinations thereof) to partially neutralize the vinegar to a pH in the range of about 4.0 to about 5.5 and
(b) evaporating water from and drying the product of step (a) to produce a concentrated acetate and an acid (e.g. sodium, potassium, calcium or magnesium acetate) in the form of a powder.

In an embodiment, the amount of basic neutralizing agent necessary to partially neutralize the vinegar is in the range of about 0.7 kg (1.5 pounds) to about 1.8 kg (4 pounds) per about 4.5 kg (10 pounds) of acetate.

In an embodiment, the concentrated food additive prepared from vinegar can be an antimicrobial food additive or buffer solution. The basic neutralizing agent of step (a) can be sodium, potassium, calcium or magnesium, carbonate or bicarbonate, and combinations thereof.

In any one or more of the foregoing embodiments, the final product, including a concentrated acetate and an acid, can have a high acid value. In an aspect, the concentrated final product can have an acid value of at least 5%. In one or more other aspects, the acidity of the final concentrated product can be from about 5% to about 50%. The acid can be, for example, acetic acid. In any one or more aspects, the acidity can be at least 6%, 7%, 8%, 9% or more. In any one or more aspects, the acidity can range from 5% to 45%, 5% to 40%, 5% to 35%, 5% to 30%, 5% to 25%, 5% to 20%, 5% to 15%, 5% to 10%, 6% to 50%, 6% to 45%, 6% to 40%, 6% to 35%, 6% to 30%, 6% to 25%, 6% to 20%, 6% to 15%, 6% to 10%, 7% to 50%, 7% to 45%, 7% to 40%, 7% to 35%, 7% to 30%, 7% to 25%, 7% to 20%, 7% to 15%, 7% to 12 %, or 7% to 10%.

Uses of the concentrated vinegar-derived food additive are provided. The uses can include treating a food product with an effective amount of a concentrated vinegar-derived food additive for food preservation. The uses can include adding a concentrated vinegar-derived food additive at an amount effective to increase the usable life of the food product. The uses can include adding a concentrated vinegar-derived food additive at an amount effective to prevent or slow the growth of one or more pathogenic microorganisms. The uses can include adding a concentrated vinegar-derived food additive at an amount effective to prevent or slow the growth of one or more spoilage microorganisms. The uses can include adding a concentrated vinegar-derived food additive at an amount effective to prevent or slow the growth of a microorganism from the genus *Listeria,* e.g. to reduce the levels of *Listeria monocytogenes,* to prevent growth of *Listeria monocytogenes,* or to slow the growth of *Listeria monocytogenes* by at least 1%, 5%, 10%, 15%, 20%, 25%, 30%, 40%, 50%, 60%, 70%, 80%, 90%, or 95% as compared to the same food product under the otherwise same conditions except without the concentrated vinegar-derived food additive . The effective amount of the concentrated vinegar-derived food additive can depend upon several factors including the type of food product, the surface area of the food product, the storage conditions, and/or the handling conditions.

The concentrated vinegar-derived food additive can be added to the food product to prevent and/or slow the growth of pathogenic microorganisms in, to prevent or slow the growth of spoilage microorganisms in, to increase the safety of, and/or to increase the usable life of processed food products, especially upon opening of the food product at the point of use or distribution. In some embodiments, the concentrated vinegar-derived food additive is effective at slowing or preventing the growth of *Listeria monocytogenes.*

The food products can be any of the food products described herein. The food products can be ready-to-eat beef products, ready-to-eat pork products, ready-to-eat poultry products, or ready-to-eat fish products. The food products can be high-pressure processed food products. Exemplary food products include deli-style turkey products, deli-style beef products, and deli-style ham products.

The food products can have a longer shelf life and/or a longer usable life than the same food products not prepared with a concentrated vinegar-derived food additive. The food products can have a lower level of pathogenic microorganisms and/or a lower level of spoilage microorganism than the otherwise same food product under the same conditions except for a concentrated vinegar-derived food additive.

The present disclosure is further illustrated by the following prophetic examples, which are provided by way of illustration and are not meant to be construed as limiting.

### EXAMPLES

### Example 1

45.4 kg (100 lbs) of up to 300 grain distilled vinegar is reacted with 4.5 kg (10 lbs) to 22.7 kg (50 lbs) of sodium bicarbonate producing 5.4 kg (12 lbs) to 18.1 kg (40 lbs) of sodium acetate. To the sodium acetate is added 1 wt % to 35 wt % of untreated vinegar to produce a dry powder or solution and an acid having a pH of 4.5 to 5.7.

### Example 2

45.4 kg (100 lbs) of up to 300 grain distilled vinegar is reacted with 4.5 kg (10 lbs) to 22.7 kg (50 lbs) sodium carbonate producing 4.5 kg (10 lbs) to 18.1 kg (40 lbs) of sodium acetate. To the sodium acetate is added 1 wt% to 35 wt % of untreated vinegar to produce a dry powder or solution and an acid having a pH of 4.5 to 5.7.

### Example 3

45.4 kg (100 lbs) of up to 300 grain distilled vinegar is reacted with 6.8 kg (15 lbs) to 22.7 kg (50 lbs) of potassium bicarbonate producing 6.8 kg (15 lbs) to 22.7 kg (50 lbs) of potassium acetate. To the potassium acetate is added 1 wt % to 35 wt % of untreated vinegar to produce a dry powder or solution and an acid having a pH of 4.5 to 5.7.

## Claims

1. A method of preparing a concentrated food additive consisting of:
(a) treating vinegar with a basic neutralizing agent to partially neutralize the vinegar to a pH in the range of 4.0 to 5.5; and
(b) evaporating water from and drying the product of step (a) to produce the concentrated food additive consisting of an acetate and an acid in the form of a powder.

2. The method according to claim 1, wherein the basic neutralizing agent is selected from the group consisting of: sodium, potassium, calcium or magnesium carbonate or bicarbonate, and combinations thereof.

3. The method of any one of claims 1-2, wherein the acetate is selected from the group consisting of: sodium acetate, potassium acetate, calcium acetate and magnesium acetate.

4. The method of any one of claims 1-3, wherein the amount of the basic neutralizing agent necessary to partially neutralize the vinegar in step (a) is in the range of 0.7 kg (1.5 pounds) to 1.8 kg (4 pounds) per 4.5 kg (10 pounds) of acetate.

5. A concentrated food additive obtainable by the steps consisting of:
(a) treating vinegar with a basic neutralizing agent to partially neutralize the vinegar to a pH in the range of 4.0 to 5.5; and
(b) evaporating water from and drying the product of step (a) to produce the concentrated food additive consisting of an acetate and an acid in the form of a powder.

6. The concentrated food additive of claim 4, wherein the concentrated food additive is a concentrated buffering agent, or a concentrated antimicrobial food additive.

7. The concentrated food additive of any one of claims 4-5, wherein the acetate is selected from the group consisting of: sodium acetate, potassium acetate, calcium acetate and magnesium acetate.

8. The concentrated food additive of any one of claims 5-7, wherein the basic neutralizing agent is selected from the group consisting of: sodium, potassium, calcium or magnesium carbonate or bicarbonate, and combinations thereof.

9. The concentrated food additive of any one of claims 5-8, wherein the amount of the basic neutralizing agent necessary to partially neutralize the vinegar in step (a) is in the range of 0.7 kg (1.5 pounds) to 1.8 kg (4 pounds) per 4.5 kg (10 pounds) of acetate.

10. The concentrated food additive of any one of claims 5-9, at an amount effective to prevent or slow the growth of a microorganism from the genus *Listeria.*

11. Use of the concentrated food additive of any of claims 5-10 to reduce bacterial growth and retaining flavor in meat, poultry, or fish comprising injecting and/or massaging the concentrated food additive into the meat, poultry, or fish to reduce bacterial growth during storage of the meat, poultry, or fish.

12. Use of the concentrated food additive of any of claims 5-10 to increase or decrease the pH of a marinade for meat, poultry, or fish comprising adding the concentrated food additive to the marinade.

13. Use of the dried concentrated food additive of any of claims 5-10 to prevent or slow the growth of a microorganism from the genus *Listeria.*

## Patentansprüche

1. Verfahren zur Herstellung eines konzentrierten Nahrungsmitteladditivs, bestehend aus:
(a) Behandeln Essig mit einem basischen Neutralisationsmittel zum Neutralisieren teilweise des Essigs auf einen pH-Wert in einem Bereich von 4,0 bis 5,5; und
(b) Verdünsten Wasser und Trocknen des Produkts aus Schritt (a), um das konzentrierte Nahrungsmitteladditiv bestehend aus einem Acetat und einer Säure in Pulverform, herzustellen.

2. Verfahren nach Anspruch 1, wobei das basische Neutralisationsmittel aus der Gruppe bestehend aus: Natrium-, Kalium-, Calcium- oder Magnesiumcarbonat oder - bicarbonat sowie deren Kombinationen, ausgewählt wird.

3. Verfahren nach einem der Ansprüche 1 bis 2, wobei das Acetat aus der Gruppe bestehend aus: Natriumacetat, Kaliumacetat, Calciumacetat und Magnesiumacetat ausgewählt wird.

4. Verfahren nach einem der Ansprüche 1 bis 3, wobei die Menge des basischen Neutralisationsmittels, die zum Neutralisieren teilweise des Essigs in Schritt (a) erforderlich ist, in dem Bereich von 0,7 kg (1,5 Pfund) bis 1,8 kg (4 Pfund) pro 4,5 kg (10 Pfund) Acetat liegt.

5. Konzentriertes Nahrungsmitteladditiv, das durch die folgenden Schritte erhältlich ist:
(a) Behandeln Essig mit einem basischen Neutralisationsmittel zum Neutralisieren teilweise des Essigs auf einen pH-Wert in dem Bereich von 4,0 bis 5,5; und
(b) Verdünsten Wasser und Trocknen des Produkts aus Schritt (a), um das konzentrierte Nahrungsmitteladditiv, bestehend aus einem Acetat und einer Säure in Pulverform, herzustellen.

6. Konzentriertes Nahrungsmitteladditiv nach Anspruch 4, wobei das konzentrierte Nahrungsmitteladditiv ein konzentriertes Puffermittel oder ein konzentriertes antimikrobielles Nahrungsmitteladditiv ist.

7. Konzentriertes Nahrungsmitteladditiv nach einem der Ansprüche 4 bis 5, wobei das Acetat aus der Gruppe bestehend aus: Natriumacetat, Kaliumacetat, Calciumacetat und Magnesiumacetat ausgewählt wird.

8. Konzentriertes Nahrungsmitteladditiv nach einem der Ansprüche 5 bis 7, wobei das basische Neutralisationsmittel aus der Gruppe bestehend aus: Natrium-, Kalium-, Calcium- oder Magnesiumcarbonat oder -bicarbonat sowie deren Kombinationen ausgewählt wird.

9. Konzentriertes Nahrungsmitteladditiv nach einem der Ansprüche 5 bis 8, wobei die Menge des basischen Neutralisationsmittels, die zum Neutralisieren teilweise des Essigs in Schritt (a) erforderlich ist, in dem Bereich von 0,7 kg (1,5 Pfund) bis 1,8 kg (4 Pfund) pro 4,5 kg (10 Pfund) Acetat liegt.

10. Konzentriertes Nahrungsmitteladditiv nach einem der Ansprüche 5 bis 9, in einer Menge, die wirksam ist, das Wachstum eines Mikroorganismus der Gattung Listeria zu verhindern oder zu verlangsamen.

11. Verwendung des konzentrierten Nahrungsmitteladditivs nach einem der Ansprüche 5 bis 10 zum Reduzieren des Bakterienwachstums und zum Halten des Geschmacks in Fleisch, Geflügel oder Fisch, umfassend Injizieren und/oder leicht Ändern des konzentrierten Nahrungsmitteladditivs in das Fleisch, Geflügel oder Fisch, um das Bakterienwachstum während der Lagerung von Fleisch, Geflügel oder Fisch zu reduzieren.

12. Verwendung des konzentrierten Nahrungsmitteladditivs nach einem der Ansprüche 5 bis 10 zum Erhöhen oder zum Verringern des pH-Werts einer Marinade für Fleisch, Geflügel oder Fisch, umfassend Hinzufügen des konzentrierten Nahrungsmitteladditivs zu der Marinade.

13. Verwendung des getrockneten konzentrierten Nahrungsmitteladditivs nach einem der Ansprüche 5 bis 10, um das Wachstum eines Mikroorganismus der Gattung Listeria zu verhindern oder zu verlangsamen.

## Revendications

1. Procédé de préparation d'un additif alimentaire concentré consistant :
(a) à traiter du vinaigre avec un agent neutralisant basique pour neutraliser partiellement le vinaigre jusqu'à un pH compris entre 4,0 et 5,5 ; et
(b) à évaporer l'eau et à sécher le produit de l'étape (a) afin de produire l'additif alimentaire concentré consistant en un acétate et un acide sous forme de poudre.

2. Procédé selon la revendication 1, dans lequel l'agent neutralisant basique est choisi dans le groupe constitué de : carbonate ou bicarbonate de sodium, potassium, calcium ou magnésium, et leurs combinaisons.

3. Procédé selon l'une quelconque des revendications 1 à 2, dans lequel l'acétate est choisi dans le groupe constitué de : acétate de sodium, acétate de potassium, acétate de calcium et acétate de magnésium.

4. Procédé selon l'une quelconque des revendications 1 à 3, dans lequel la quantité d'agent neutralisant basique nécessaire pour neutraliser partiellement le vinaigre à l'étape (a) est comprise entre 0,7 kg (1,5 livres) et 1,8 kg (4 livres) par 4,5 kg (10 livres) d'acétate.

5. Additif alimentaire concentré pouvant être obtenu par les étapes consistant :
(a) à traiter du vinaigre avec un agent neutralisant basique pour neutraliser partiellement le vinaigre jusqu'à un pH compris entre 4,0 et 5,5 ; et
(b) à évaporer l'eau et à sécher le produit de l'étape (a) afin de produire l'additif alimentaire concentré consistant en un acétate et un acide sous forme de poudre.

6. Additif alimentaire concentré selon la revendication 4, dans lequel l'additif alimentaire concentré est un agent tampon concentré, ou un additif alimentaire antimicrobien concentré.

7. Additif alimentaire concentré selon l'une quelconque des revendications 4 à 5, dans lequel l'acétate est choisi dans le groupe constitué de : acétate de sodium, acétate de potassium, acétate de calcium et acétate de magnésium.

8. Additif alimentaire concentré selon l'une quelconque des revendications 5 à 7, dans lequel l'agent neutralisant basique est choisi dans le groupe constitué de : carbonate ou bicarbonate de sodium, potassium, calcium ou magnésium, et leurs combinaisons.

9. Additif alimentaire concentré selon l'une quelconque des revendications 5 à 8, dans lequel la quantité d'agent neutralisant basique nécessaire pour neutraliser partiellement le vinaigre à l'étape (a) est comprise entre 0,7 kg (1,5 livres) et 1,8 kg (4 livres) par 4,5 kg (10 livres) d'acétate.

10. Additif alimentaire concentré selon l'une quelconque des revendications 5 à 9, en une quantité efficace pour empêcher ou ralentir la croissance d'un micro-organisme du genre Listeria.

11. Utilisation de l'additif alimentaire concentré selon l'une quelconque des revendications 5 à 10 pour réduire la croissance bactérienne et conserver la saveur dans la viande, la volaille ou le poisson comprenant l'injection et/ou le massage de l'additif alimentaire concentré dans la viande, la volaille ou le poisson pour réduire la croissance bactérienne pendant le stockage de la viande, de la volaille ou du poisson.

12. Utilisation de l'additif alimentaire concentré selon l'une quelconque des revendications 5 à 10 pour augmenter ou diminuer le pH d'une marinade pour viande, volaille ou poisson comprenant l'ajout de l'additif alimentaire concentré à la marinade.

13. Utilisation de l'additif alimentaire concentré séché selon l'une quelconque des revendications 5 à 10 pour empêcher ou ralentir la croissance d'un micro-organisme du genre Listeria.
